# EUROPÄISCHE PATENTANMELDUNG

(11) **EP 0 917 331 A2**
(43) Veröffentlichungstag der Anmeldung: **19.05.1999**
(21) Anmeldenummer: 98117112.7
(22) Anmeldetag: 10.09.1998
(51) Int. Cl.: H04M 1/04, H04M 1/05

(54) **Tragevorrichtung für ein elektrisches Gerät**

(30) Priorität: 18.11.1997 DE 19750990
(71) Anmelder: ROBERT BOSCH GMBH, 70442 Stuttgart (DE)
(72) Erfinder: Bieneck, Uwe, 31234 Edemissen (DE); Peters, Uwe, 14197 Berlin (DE); Luenebach, Wolfgang, 38271 Baddeckenstedt (DE)

(57) **Zusammenfassung**

Es wird eine Tragevorrichtung (1) für ein elektrisches Gerät (5) vorgeschlagen, das den Anschluß eines Mikrofons und/oder eines Lautsprechers ermöglicht. Die Tragevorrichtung (1) umfaßt Kontakte (10, 15, 20) zur Kontaktierung mit entsprechenden Gegenkontakten (25, 30, 35) des von der Tragevorrichtung (1) tragbaren elektrischen Gerätes (5). Über die Kontakte (10, 15, 20) ist ein Mikrofon (40) und/oder mindestens ein Lautsprecher (45), insbesondere ein Ohr- oder ein Kopfhörer an ein mit den Kontakten (10, 15, 20) der Tragevorrichtung (1) über die Gegenkontakte (25, 30, 35) kontaktierendes elektrisches Gerät (5) anschließbar und betreibbar.

## Beschreibung

### Stand der Technik

Die Erfindung geht von einer Tragevorrichtung für ein elektrisches Gerät nach der Gattung des Hauptanspruchs aus.

Aus der DE 42 28 632 C1 ist bereits ein Halteclip für ein tragbares elektronisches Gerät, wie beispielsweise ein schnurloses Telefon bekannt. Dabei wird das tragbare Gerät von dem Halteclip an drei Seiten umgriffen und der Halteclip ist mittels Rippen in Nuten des tragbaren Gerätes eingeschnappt.

### Vorteile der Erfindung

Die erfindungsgemäße Tragevorrichtung mit den Merkmalen des Hauptanspruchs hat demgegenüber den Vorteil, daß Kontakte zur Kontaktierung mit entsprechenden Gegenkontakten des von der Tragevorrichtung tragbaren elektrischen Gerätes vorgesehen sind. Auf diese Weise lassen sich elektronische Komponenten über die Tragevorrichtung elektrisch leitend an das elektrische Gerät anschließen oder gar in die Tragevorrichtung platzsparend integrieren, so daß die Funktionalität der Tragevorrichtung erhöht wird.

Durch die in den Unteransprüchen aufgeführten Maßnahmen sind vorteilhafte Weiterbildungen und Verbesserungen der im Hauptanspruch angegebenen Tragevorrichtung möglich.

Besonders vorteilhaft ist es, daß über die Kontakte ein Mikrofon und/oder mindestens ein Lautsprecher, insbesondere ein Ohr- oder ein Kopfhörer, an ein mit den Kontakten der Tragevorrichtung über die Gegenkontakte kontaktierendes elektrisches Gerät anschließbar und betreibbar ist. Auf diese Weise wird die Funktionalität der Tragevorrichtung erhöht und ein zusätzlicher Steckverbinder im elektrischen Gerät zum Anschluß des Mikrofons und/oder des mindestens einen Lautsprechers eingespart, da dessen Funktion von der Tragevorrichtung mitübernommen wird. Somit werden Herstellungs- und Materialaufwand sowie Kosten eingespart. Außerdem wird die Bedienung für den Benutzer vereinfacht, da er die Kontaktierung bereits durch Einführen des Elektrischen Gerätes in die Tragevorrichtung herstellt, so daß kein separater Kontaktierungsvorgang beispielsweise über eine Steckverbindung erforderlich ist. Gleichzeitig kann das Elektrische Gerät frei von störenden Anschlußkabeln für das Mikrofon und/oder den mindestens einen Lautsprecher bleiben.

Besonders vorteilhaft ist es, daß an der Tragevorrichtung mindestens eine Lautstärkeregelung für das Mikrofon und/oder den mindestens einen Lautsprecher vorgesehen ist. Auf diese Weise wird die Funktionalität der Tragevorrichtung weiter erhöht und der Bedienkomfort für den Benutzer weiter verbessert. Eine entsprechende Lautstärkeregelung kann beim Elektrischen Gerät eingespart werden. Außerdem kann der Benutzer die Lautstärke des Mikrofons und/oder des mindestens einen Lautsprechers individuell an seine Bedürfnisse anpassen.

Ein weiterer Vorteil besteht darin, daß die Kontakte als Flächenkontakte ausgebildet sind. Dies stellt eine besonders preiswerte Realisierung der Kontakte dar und gewährleistet gleichzeitig eine einfache und sichere Kontaktierung der Kontakte mit den Gegenkontakten des Elektrischen Gerätes.

Ein weiterer Vorteil besteht darin, daß mindestens ein elektrisch mit den Kontakten verbundener Anschluß vorgesehen ist, über den das Mikrofon und/oder der mindestens eine Lautsprecher an der Tragevorrichtung anschließbar und betreibbar ist. Auf diese Weise lassen sich das Mikrofon und/oder der mindestens eine Lautsprecher von der Tragevorrichtung trennen und dadurch auch anderweitig einsetzen. Außerdem kann für den Fall, daß die Verwendung des Mikrofons und/oder des mindestens einen Lautsprechers vom Benutzer nicht gewünscht ist, das Mikrofon und/oder der mindestens eine Lautsprecher auf einfache Weise von der Tragevorrichtung entfernt werden, so daß der Benutzer durch das Mikrofon und/oder den mindestens einen Lautsprecher und die damit verbundenen Anschlußkabel nicht unnötig gestört wird.

Ein weiterer Vorteil besteht darin, daß das Mikrofon und/oder der mindestens eine Lautsprecher fest an die Tragevorrichtung angeschlossen und mit den Kontakten der Tragevorrichtung elektrisch leitend verbunden ist. Auf diese Weise läßt sich der Herstellungsaufwand und -preis für die erfindungsgemäße Tragevorrichtung reduzieren, da kein separater Anschluß für das Mikrofon und/oder den mindestens einen Lautsprecher erforderlich ist. Weiterhin kann eine Steckvorrichtung zum Anschluß des Mikrofons und/oder des mindestens einen Lautsprechers an der Tragevorrichtung eingespart werden.

Ein weiterer Vorteil besteht darin, das Mikrofon und/oder den mindestens einen Lautsprecher in die Tragevorrichtung zu integrieren und mit den Kontakten der Tragevorrichtung elektrisch leitend zu verbinden. Auf diese Weise wird die Funktionalität der Tragevorrichtung weiter erhöht und erheblich Platz eingespart. Störende Zuleitungskabel zum Mikrofon und/oder mindestens einen Lautsprecher werden ebenfalls eingespart.

### Zeichnung

Ausführungsbeispiele der Erfindung sind in der Zeichnung dargestellt und in der nachfolgenden Beschreibung näher erläutert. Es zeigen Figur 1 eine erfindungsgemäße Tragevorrichtung mit angeschlossenem Mikrofon und Lautsprecher in einer Seitendarstellung, Figur 2 eine Vorderansicht der erfindungsgemäßen Tragevorrichtung und Figur 3 eine erfindungsgemäße Tragevorrichtung mit integriertem Mikrofon.

### Beschreibung der Ausführungsbeispiele

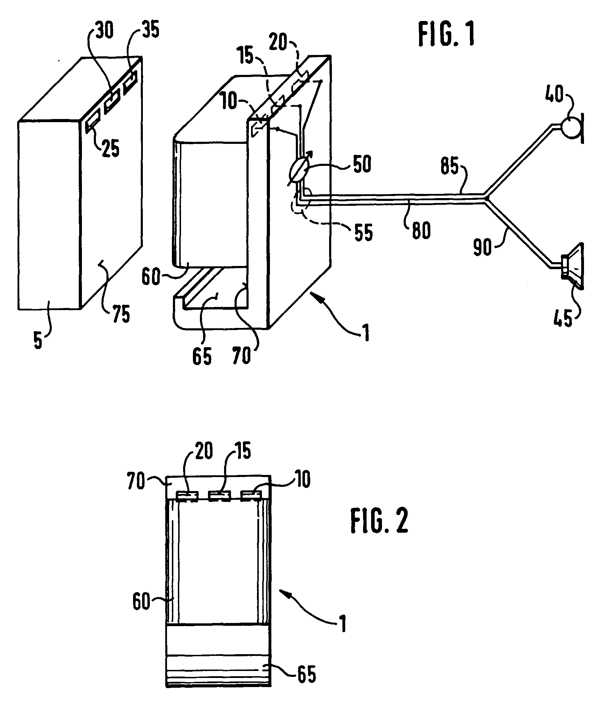

In Figur 1 kennzeichnet 1 eine Tragevorrichtung für ein als Funkgerät ausgebildetes elektrisches Gerät 5. Die Tragevorrichtung 1 umfaßt dabei beispielsweise eine Halterung 60, die ein eingelegtes elektrisches Gerät 5 an drei Seiten umschließt und gegen eine Seitenfläche 70 der Tragevorrichtung 1 drückt. Die Tragevorrichtung 1 kann weiterhin eine Auflage 65 aufweisen, auf der ein von der Halterung 60 gehaltenes elektrisches Gerät 5 aufliegt und somit vor Herunterfallen gesichert ist. Es sind jedoch auch beliebige andere Haltevorrichtungen zur Halterung des elektrischen Gerätes 5 an der Tragevorrichtung 1 möglich. Die Tragevorrichtung 1 umfaßt weiterhin eine in Figur 1 nicht dargestellte, beispielsweise clipförmige Befestigungsvorrichtung zur Befestigung der Tragevorrichtung 1 an einem Gürtel oder einer Tasche eines Benutzers.

Das elektrische Gerät 5 weist an einer Seitenfläche 75 einen ersten Gegenkontakt 25, einen zweiten Gegenkontakt 30 und einen dritten Gegenkontakt 35 auf. Dem entsprechen an der Seitenfläche 70 der Tragevorrichtung 1 ein erster Kontakt 10, ein zweiter Kontakt 15 und ein dritter Kontakt 20. Je nach Bedarf können auch mehr als drei Gegenkontakte am elektrischen Gerät 5 und entsprechend mehr als drei Kontakte an der Tragevorrichtung 1 vorgesehen sein. Die drei Kontakte 10, 15, 20 können dabei beispielsweise als Flächenkontakte ausgebildet sein. Die Gegenkontakte 25, 30, 35 können zur besseren Kontaktierung mit den Kontakten 10, 15, 20 von der Seitenfläche 75 des elektrischen Gerätes 5 jeweils hervorgehoben sein. Wird das elektrische Gerät 5 so in die Halterung 60 der Tragevorrichtung 1 eingeführt, daß seine Seitenfläche 75 der Seitenfläche 70 der Tragevorrichtung 1 zugewandt ist, so kommt es bei Auflage des elektrischen Gerätes 5 auf der Auflage 65 der Tragevorrichtung 1 zur Kontaktierung des ersten Gegenkontaktes 25 mit dem ersten Kontakt 10, des zweiten Gegenkontaktes 30 mit dem zweiten Kontakt 15 und des dritten Gegenkontaktes 35 mit dem dritten Kontakt 20, wobei die Halterung 60 das elektrische Gerät 5 gegen die Seitenfläche 70 der Tragevorrichtung 1 drückt, wozu sie beispielsweise aus einem elastischen Material gebildet ist.

Der dritte Kontakt 20 ist über eine erste Signalleitung 85 mit einem Mikrofon 40 einer Freisprecheinrichtung verbunden. Der erste Kontakt 10 ist über eine zweite Signalleitung 90 mit einem Lautsprecher 45 verbunden, der ebenfalls Bestandteil der Freisprecheinrichtung und als Ohrhörer oder Kopfhörer ausgebildet sein kann. Bei Ausbildung als Kopfhörer kann noch ein zusätzlicher Lautsprecher vorgesehen sein, der entweder ebenfalls über die zweite Signalleitung 90 mit dem ersten Kontakt 10 verbunden ist oder über eine eigene Signalleitung mit einem in Figur 1 nicht dargestellten vierten Kontakt verbunden ist, dem am elektrischen Gerät ein in Figur 1 ebenfalls nicht dargestellter vierter Gegenkontakt des elektrischen Gerätes 1 entspricht. Der zweite Kontakt 15 ist über eine Bezugspotential- bzw. Masseleitung 80 sowohl mit dem Mikrofon 40 als auch mit dem Lautsprecher 45 verbunden.

Das Mikrofon 40 und der Lautsprecher 45 können entweder fest an die Tragevorrichtung 1 angeschlossen und mit den Kontakten 10, 15, 20 der Tragevorrichtung 1 elektrisch leitend verbunden sein oder lösbar, beispielsweise mittels einer Steckverbindung, über einen Anschluß 55 an der Tragevorrichtung 1 anschließbar sein. Über den Anschluß 55 sind dann die erste Signalleitung 85, die zweite Signalleitung 90 und die Masseleitung 80 ebenfalls elektrisch leitend mit den Kontakten 10, 15, 20 der Tragevorrichtung 1 verbindbar, da der Anschluß 55 entsprechend mit den Kontakten 10, 15, 20 elektrisch verbunden ist. Da der Anschluß 55 lediglich optional an der Tragevorrichtung 1 vorgesehen ist, ist er in Figur 1 gestrichelt dargestellt.

Im Signalweg für das Mikrofon 40 und den Lautsprecher 45 kann in der Tragevorrichtung 1 eine Lautstärkeregelung 50 vorgesehen sein, über die der Benutzer die Mikrofon- und die Lautsprecherlautstärke selbst einstellen und dadurch individuell an seine Bedürfnisse anpassen kann. Dabei kann auch für das Mikrofon 40 und den Lautsprecher 45 jeweils eine getrennte Lautstärkeregelung vorgesehen sein, so daß die Lautstärke für das Mikrofon 40 und den Lautsprecher 45 getrennt voneinander eingestellt werden können. Es kann auch lediglich für den Lautsprecher 45 oder das Mikrofon 40 eine Lautstärkeregelung vorgesehen sein.

Statt eines einzigen Anschlusses 55 sowohl für das Mikrofon 40 als auch für den Lautsprecher 45 kann auch sowohl für das Mikrofon 40 als auch für den Lautsprecher 45 jeweils ein eigener Anschluß an der Tragevorrichtung 1 vorgesehen sein. In diesem Fall lassen sich das Mikrofon 40 und der Lautsprecher 45 getrennt voneinander betreiben, also auch dann, wenn das Mikrofon 40 und der Lautsprecher 45 nicht in einer gemeinsamen Freisprecheinrichtung integriert sind.

Es ist auch möglich, an die Tragevorrichtung 1 nur das Mikrofon 40 bzw. nur den Lautsprecher 45 oder mehrere Lautsprecher anzuschließen. Es können alternativ oder zusätzlich zum Mikrofon 40 und/oder dem mindestens einen Lautsprecher 45 auch beliebige andere elektronische Komponenten über die Tragevorrichtung 1 an das elektrische Gerät 5 angeschlossen und gegebenenfalls zumindest ein Teil der elektronischen Komponenten in die Tragevorrichtung 1 integriert sein. Je nach Anzahl und Art der insgesamt angeschlossenen elektronischen Komponenten sind mehr oder weniger Kontakte an der Tragevorrichtung 1 und entsprechende Gegenkontakte am Funkgerät 5 erforderlich.

Das Mikrofon 40 ist bei Anschluß an die Tragevorrichtung 1 durch Kontaktierung des dritten Gegenkontaktes 35 mit dem dritten Kontakt 20 und des zweiten Gegenkontaktes 30 mit dem zweiten Kontakt 15 über das elektrische Gerät 5 betreibbar. Der Lautsprecher 45 ist bei Anschluß an die Tragevorrichtung 1 durch Kontaktierung des ersten Gegenkontakts 25 mit dem ersten Kontakt 10 und des zweiten Gegenkontakts 30 mit dem zweiten Kontakt 15 ebenfalls über das elektrische Gerät 5 betreibbar.

Die Kontakte 10, 15, 20 sind in Figur 1 gestrichelt dargestellt, da die Seitenfläche 70 der Tragevorrichtung 1 aufgrund der räumlichen Darstellung in Figur 1 nicht sichtbar dargestellt ist. In der Vorderansicht der Tragevorrichtung 1 gemäß Figur 2 sind die flächig ausgebildeten Kontakte 10, 15, 20 deutlich zu sehen, wobei in Figur 2 gleiche Bezugszeichen gleiche Elemente kennzeichnen.

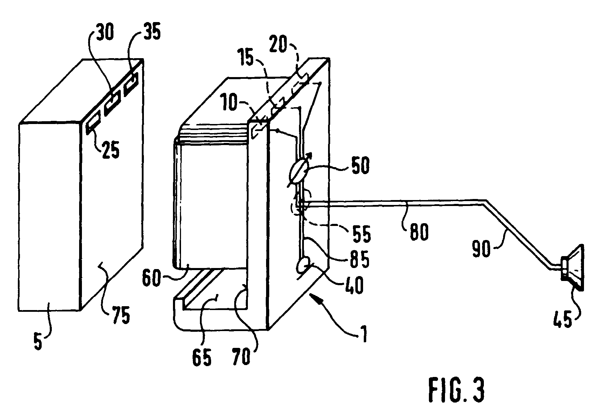

Ein weiteres Ausführungsbeispiel einer erfindungsgemäßen Tragevorrichtung ist in Figur 3 dargestellt. In Figur 3 kennzeichnen dabei gleiche Bezugszeichen gleiche Elemente wie in Figur 1. Das Ausführungsbeispiel gemäß Figur 3 ist gleich aufgebaut wie das Ausführungsbeispiel gemäß Figur 1 mit dem Unterschied, daß das Mikrofon 40 als Freisprechmikrofon in die Tragevorrichtung 1 integriert ist, so daß auch die erste Signalleitung 85 vollständig innerhalb der Tragevorrichtung 1 verläuft, genauso wie ein entsprechender Abzweig von der Masseleitung 80 zum Mikrofon 40.

In weiteren Ausführungsbeispielen kann auch vorgesehen sein, einen oder mehrere Lautsprecher zusätzlich oder alternativ zum Mikrofon 40 in der Tragevorrichtung 1 auf entsprechende Weise zu integrieren.

Das elektrische Gerät 5 kann beispielsweise als Mobilfunktelefon, Schnurlostelefon, Betriebsfunkgerät, Handfunkgerät oder dergleichen ausgebildet sein.

## Patentansprüche

1. Tragevorrichtung (1) für ein elektrisches Gerät (5), insbesondere ein als Mobilfunk- oder Schnurlostelefon ausgebildetes Funkgerät, dadurch gekennzeichnet, daß an der Tragevorrichtung (1) Kontakte (10, 15, 20) vorgesehen sind, die mit entsprechenden Gegenkontakten (25, 30, 35) des von der Tragevorrichtung (1) tragbaren elektrischen Gerätes (5) korrespondieren und über die mindestens eine elektronische Komponente (40, 45) an das elektrische Gerät (5) anschließbar ist.

2. Tragevorrichtung (1) nach Anspruch 1, dadurch gekennzeichnet, daß über die Kontakte (10, 15, 20) ein Mikrofon (40) und/oder mindestens ein Lautsprecher (45), insbesondere ein Ohr- oder ein Kopfhörer, an das mit den Kontakten (10, 15, 20) der Tragevorrichtung (1) über die Gegenkontakte (25, 30, 35) kontaktierende elektrische Gerät (5) anschließbar ist.

3. Tragevorrichtung (1) nach Anspruch 2, dadurch gekennzeichnet, daß an der Tragevorrichtung (1) mindestens eine Lautstärkeregelung (50) für das Mikrofon (40) und/oder den mindestens einen Lautsprecher (45) vorgesehen ist.

4. Tragevorrichtung (1) nach Anspruch 1, 2 oder 3, dadurch gekennzeichnet, daß die Kontakte (10, 15, 20) als Flächenkontakte ausgebildet sind.

5. Tragevorrichtung (1) nach Anspruch 2, 3 oder 4, dadurch gekennzeichnet, daß mindestens ein elektrisch mit den Kontakten (10, 15, 20) verbundener Anschluß (55) vorgesehen ist, über den das Mikrofon (40) und/oder der mindestens eine Lautsprecher (45) an der Tragevorrichtung (1) anschließbar und betreibbar ist.

6. Tragevorrichtung (1) nach Anspruch 2, 3 oder 4, dadurch gekennzeichnet, daß das Mikrofon (40) und/oder der mindestens eine Lautsprecher (45) fest an die Tragevorrichtung (1) angeschlossen und mit den Kontakten (10, 15, 20) der Tragevorrichtung (1) elektrisch leitend verbunden ist.

7. Tragevorrichtung (1) nach Anspruch 2, 3 oder 4, dadurch gekennzeichnet, daß das Mikrofon (40) und/oder der mindestens eine Lautsprecher (45) in die Tragevorrichtung (1) integriert und mit den Kontakten (10, 15, 20) der Tragevorrichtung (1) elektrisch leitend verbunden ist.
